# EUROPEAN PATENT APPLICATION

(11) **EP 3 859 648 A1**
(43) Date of publication of application: **04.08.2021**
(21) Application number: 19912920.6
(22) Date of filing: 29.11.2019
(51) Int. Cl.: G06Q 40/04

(54) **CROSS-CHAIN USAGE-RIGHTS SYSTEM AND METHOD, DEVICE, ELETRONIC APPARATUS AND STORAGE MEDIUM**

(30) Priority: 31.01.2019 CN 201910098527
(71) Applicant: Advanced New Technologies Co., Ltd., George Town, Grand Cayman KY1-9008 (KY)
(72) Inventor: QIU, Honglin, Hangzhou, Zhejiang 310000 (CN)
(74) Representative: Goddar, Heinz J.
(86) International application number: PCT/CN2019/122127
(87) International publication number: WO 2020/155832

(57) **Abstract**

One or more embodiments of the present specification provide cross-chain right usage systems, methods, apparatuses, electronic devices, and storage media. The system can include the following: one or more record blockchains, where the record blockchain is used to record data that specifies ownership of rights; one or more right usage blockchains, where the right usage blockchain is used to process a right usage service; and at least one cross-chain relay, where the cross-chain relay is separately connected to at least one record blockchain and at least one right usage blockchain; the cross-chain relay reads data that specifies ownership of rights recorded on the record blockchain in response to a right confirmation request initiated by the right usage blockchain, so that the right usage blockchain processes a corresponding right usage service based on a response result.

## Description

### TECHNICAL FIELD

One or more embodiments of the present specification relate to the field of blockchain technologies, and in particular, to cross-chain right usage systems, methods, apparatuses, electronic devices, and storage media.

### BACKGROUND

The blockchain technology (also referred to as a distributed ledger technology) is a decentralized distributed database technology. Because it has advantages of decentralization, openness and transparency, tamper-resistance, trustworthiness, etc., the blockchain technology is applicable to various application scenarios that require high data reliability.

### SUMMARY

In view of the previous description, one or more embodiments of the present specification provide cross-chain right usage systems, methods, apparatuses, electronic devices, and storage media.

To achieve the previous objective, one or more embodiments of the present specification provide the following technical solutions:

According to a first aspect of one or more embodiments of the present specification, a cross-chain right usage system is provided, including the following: one or more record blockchains, where the record blockchain is used to record data that specifies ownership of rights; one or more right usage blockchains, where the right usage blockchain is used to process a right usage service; and at least one cross-chain relay, where the cross-chain relay is separately connected to at least one record blockchain and at least one right usage blockchain; the cross-chain relay reads data that specifies ownership of rights recorded on the record blockchain in response to a right confirmation request initiated by the right usage blockchain, so that the right usage blockchain processes a corresponding right usage service based on a response result.

According to a second aspect of one or more embodiments of the present specification, a cross-chain right usage method is provided, where the method is applied to a cross-chain relay, the cross-chain relay is separately connected to at least one record blockchain and at least one right usage blockchain, and the method includes the following: receiving a right confirmation request initiated by the right usage blockchain for a right usage service; reading data that specifies ownership of rights recorded on the record blockchain; and responding to the right confirmation request based on the data that specifies the ownership of rights, so that the right usage blockchain processes the right usage service based on a response result.

According to a third aspect of one or more embodiments of the present specification, a cross-chain right usage method is provided, where the method is applied to a blockchain node on a right usage blockchain, the right usage blockchain is connected to a cross-chain relay, the cross-chain relay is further connected to at least one record blockchain, and the method includes the following: initiating a right confirmation request to the cross-chain relay for a right usage service, so that the cross-chain relay reads data that specifies ownership of rights recorded on the record blockchain and responds to the right confirmation request based on the data that specifies the ownership of rights; and processing the right usage service based on a response result returned by the cross-chain relay.

According to a fourth aspect of one or more embodiments of the present specification, a cross-chain right usage apparatus is provided, where the apparatus is applied to a cross-chain relay, the cross-chain relay is separately connected to at least one record blockchain and at least one right usage blockchain, and the apparatus includes the following: a receiving unit, configured to receive a right confirmation request initiated by the right usage blockchain for a right usage service; a reading unit, configured to read data that specifies ownership of rights recorded on the record blockchain; and a responding unit, configured to respond to the right confirmation request based on the data that specifies the ownership of rights, so that the right usage blockchain processes the right usage service based on a response result.

According to a fifth aspect of one or more embodiments of the present specification, a cross-chain right usage apparatus is provided, where the apparatus is applied to a blockchain node on a right usage blockchain, the right usage blockchain is connected to a cross-chain relay, the cross-chain relay is further connected to at least one record blockchain, and the apparatus includes the following: a requesting unit, configured to initiate a right confirmation request to the cross-chain relay for a right usage service, so that the cross-chain relay reads data that specifies ownership of rights recorded on the record blockchain and responds to the right confirmation request based on the data that specifies the ownership of rights; and a processing unit, configured to process the right usage service based on a response result returned by the cross-chain relay.

According to a sixth aspect of one or more embodiments of the present specification, an electronic device is provided, including the following: a processor; and a memory, configured to store a processor executable instruction, where the processor runs the executable instruction to implement the method according to the second aspect or the third aspect.

According to a seventh aspect of one or more embodiments of the present specification, a computer readable storage medium is provided, where the computer readable storage medium stores a computer instruction, and the instruction is executed by a processor to implement the steps of the method according to the second aspect or the third aspect.

### BRIEF DESCRIPTION OF DRAWINGS

FIG. 1 is a schematic diagram illustrating an example environment, according to some example embodiments;
FIG. 2 is a schematic diagram illustrating a conceptual architecture, according to some example embodiments;
FIG. 3 is a flowchart illustrating a cross-chain right usage method, according to some example embodiments;
FIG. 4 is a flowchart illustrating another cross-chain right usage method, according to some example embodiments;
FIG. 5 is a schematic structural diagram illustrating a cross-chain right usage system, according to some example embodiments;
FIG. 6 is a schematic structural diagram illustrating a device, according to some example embodiments;
FIG. 7 is a block diagram illustrating a cross-chain right usage apparatus, according to some example embodiments;
FIG. 8 is a schematic structural diagram illustrating another device, according to some example embodiments; and
FIG. 9 is a block diagram illustrating another cross-chain right usage apparatus, according to some example embodiments.

### DESCRIPTION OF EMBODIMENTS

Example embodiments are described in detail here, and examples of the example embodiments are presented in the accompanying drawings. When the following description relates to the accompanying drawings, unless specified otherwise, same numbers in different accompanying drawings represent same or similar elements. Implementations described in the following example embodiments do not represent all implementations consistent with one or more embodiments of the present specification. On the contrary, the implementations are only examples of apparatuses and methods that are described in the appended claims in detail and consistent with some aspects of one or more embodiments of the present specification.

It is worthwhile to note that the steps of the corresponding method are not necessarily performed in the order shown and described in the present specification in other embodiments. In some other embodiments, the method can include more or less steps than those described in the present specification. In addition, a single step described in the present specification may be decomposed into a plurality of steps in other embodiments for description; and a plurality of steps described in the present specification may be combined into a single step for description in other embodiments.

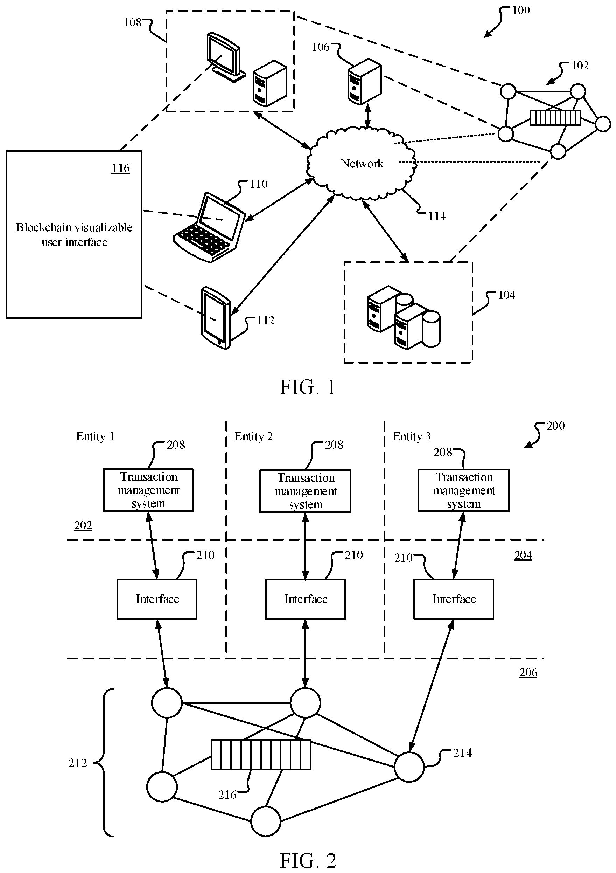

FIG. 1 is a schematic diagram illustrating an example environment, according to some example embodiments. As shown in FIG. 1, an example environment 100 allows an entity to participate in a blockchain network 102. The blockchain network 102 can be a blockchain network of a public type, a private type, or a consortium type. The example environment 100 can include computing devices 104, 106, 108, 110, and 112, and a network 114. In some embodiments, the network 114 can include a local area network (LAN), a wide area network (WAN), the Internet, or a combination thereof, and can be connected to a website, user equipment (e.g., a computing device), and a backend system. In some embodiments, the network 114 can be accessed through wired and/or wireless communication.

In some cases, the computing devices 106 and 108 can be nodes (not shown) of a cloud computing system, or each of the computing devices 106 and 108 can be a standalone cloud computing system, which includes a plurality of computers that are interconnected through the network and that function as distributed processing systems.

In some embodiments, the computing devices 104 to 108 can run any appropriate computing system to enable them to serve as nodes in the blockchain network 102; for example, the computing devices 104 to 108 can include, but are not limited to, servers, desktop computers, notebook computers, tablet computers, and smartphones. In some embodiments, the computing devices 104 to 108 can belong to related entities and be used to implement corresponding services. For example, the services can be used to manage a transaction of a specific entity or a transaction between a plurality of entities.

In some embodiments, the computing devices 104 to 108 individually store a blockchain ledger corresponding to the blockchain network 102. The computing device 104 can be (or include) a network server for providing browser functions, and the network server can provide visual information related to the blockchain network 102 based on the network 114. In some cases, the computing device 104 may not participate in block verification, but monitors the blockchain network 102 to determine when other nodes (which can, for example, include the computing devices 106 to 108) reach a consensus, and generate a corresponding blockchain visualizable user interface accordingly.

In some embodiments, the computing device 104 can receive a request initiated by a client device (for example, the computing device 110 or the computing device 112) for the blockchain visualizable user interface. In some cases, a node of the blockchain network 102 can serve as a client device. For example, a user of the computing device 108 can use a browser running on the computing device 108 to send the previous request to the computing device 104.

In response to the previous request, the computing device 104 can generate a blockchain visualizable user interface (such as a web page) based on a stored blockchain ledger, and send the generated blockchain visualizable user interface to the requesting client device. If the blockchain network 102 is a blockchain network of a private type or a consortium type, the request for the blockchain visualizable user interface can include user authorization information. Before the blockchain visualizable user interface is generated and sent to the requesting client device, the computing device 104 can verify the user authorization information, and return the corresponding blockchain visualizable user interface after the verification succeeds.

The blockchain visualizable user interface can be displayed on the client device (for example, it can be displayed in a user interface 116 shown in FIG. 1). When the blockchain ledger is updated, display content of the user interface 116 can also be updated accordingly. In addition, the user's interaction with the user interface 116 may result in requests for other user interfaces, such as displaying block lists, block details, transaction lists, transaction details, account lists, account details, contract lists, contract details, or search result pages generated by the user's search on the blockchain network, etc.

FIG. 2 is a schematic diagram illustrating a conceptual architecture, according to some example embodiments. As shown in FIG. 2, the conceptual architecture 200 includes an entity layer 202, a hosting service layer 204, and a blockchain network layer 206. For example, the entity layer 202 can include three entities: entity 1, entity 2, and entity 3, and each entity has its own transaction management system 208.

In some embodiments, the hosting service layer 204 can include an interface 210 corresponding to each transaction management system 208. For example, each transaction management system 208 uses a protocol (for example, Hypertext Transfer Protocol Security (HTTPS), etc.) to communicate with the respective interface 210 through a network (for example, the network 114 in FIG. 1). In some examples, each interface 210 can provide a communication connection between its corresponding transaction management system 208 and the blockchain network layer 206; more specifically, the interface 210 can communicate with the blockchain network 212 of the blockchain network layer 206. In some examples, the communication between the interface 210 and the blockchain network layer 206 can be implemented using remote procedure calls (RPCs). In some examples, the interface 210 can provide the transaction management system 208 with an API interface for accessing the blockchain network 212.

As described in the present specification, the blockchain network 212 is provided in the form of a peer-to-peer network. The peer-to-peer network includes a plurality of nodes 214, and the nodes 214 are individually configured to make the blockchain ledger 216 formed by the blockchain-type data persistent. FIG. 2 shows only one blockchain ledger 216, but there may be a plurality of blockchain ledgers 216 or duplicates thereof in the blockchain network 212. For example, each node 214 can maintain one blockchain ledger 216 or a duplicate thereof.

It is worthwhile to note that, the transaction described in the present specification is a piece of data that is created by a user through a client device of a blockchain and needs to be eventually published to a distributed database of the blockchain. Transactions in the blockchain are classified into transactions in a narrow sense and transactions in a broad sense. A transaction in a narrow sense refers to a value transfer that is published by a user to the blockchain. For example, in a conventional bitcoin blockchain network, a transaction can be a funds transfer initiated by a user in the blockchain. A transaction in a broad sense refers to a piece of service data with a service intent that is published by a user to the blockchain. For example, an operator can build a consortium blockchain depending on an actual service need, and with the help of the consortium blockchain, deploy some other types of online services (such as a rental service, a vehicle dispatching service, an insurance claim settlement service, a credit service, a medical service, etc.) that are unrelated to value transfer. In such consortium blockchain, a transaction can be a service message or service request with a service intent that is published by the user in the consortium blockchain.

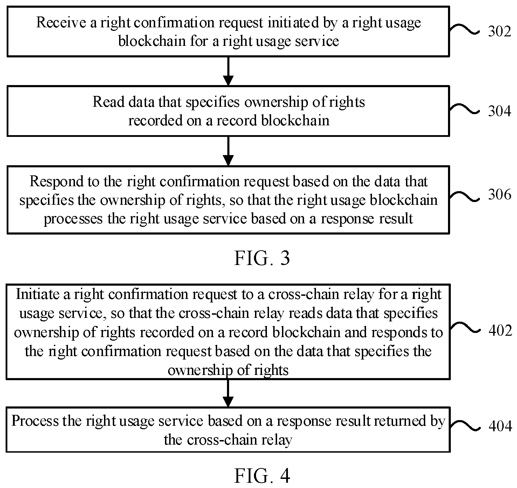

FIG. 3 is a flowchart illustrating a cross-chain right usage method, according to some example embodiments. As shown in FIG. 3, the method is applied to a cross-chain relay, the cross-chain relay is separately connected to at least one record blockchain and at least one right usage blockchain, and the method can include the following steps:

Step 302: Receive a right confirmation request initiated by the right usage blockchain for a right usage service.

In some embodiments, the cross-chain relay is used to implement a relay function between the right usage blockchain and the record blockchain, so that the right usage blockchain can access the record blockchain through the cross-chain relay, thereby implementing interconnection between the right usage blockchain and the record blockchain. In addition, based on the relay function implemented by the cross-chain relay, the right usage blockchain and the record blockchain are individually connected to the cross-chain relay, instead of direct interconnection between the right usage blockchain and the record blockchain. Depending on actual needs, the right usage blockchains and the record blockchains that are connected to the cross-chain relay can be increased or decreased, so that the entire system has excellent scalability.

In some embodiments, when the right usage blockchain initiates a right confirmation request to the cross-chain relay, it should specifically be that at least one blockchain node on the right usage blockchain initiates the right confirmation request to the cross-chain relay. For example, the blockchain client device can send a request instruction to at least one blockchain node on the right usage blockchain based on the user's instruction, so that the at least one blockchain node can initiate a corresponding right confirmation request to the cross-chain relay. For another example, the blockchain client device can submit a transaction proposal to at least one blockchain node on the right usage blockchain, so that when consensus is reached on the transaction proposal and the transaction proposal is executed, the previous right confirmation request can be initiated to the cross-chain relay. As another example, the blockchain client device can submit a transaction proposal to at least one blockchain node on the right usage blockchain, so that when consensus is reached on the transaction proposal and the transaction proposal is executed, a smart contract can be invoked. The smart contract can be used to automatically initiate the previous right confirmation request to the cross-chain relay, and the smart contract can further determine whether to perform a related operation based on data that specifies ownership of rights fed back by the record blockchain. For example, the related operation is allowed to be smoothly executed only when the data that specifies the ownership of rights indicates that a target right belongs to a target object; otherwise, the related operation is terminated.

Step 304: Read data that specifies ownership of rights recorded on the record blockchain.

In some embodiments, the record blockchain is used to record the data that specifies the ownership of rights. Book copyright is used as an example, and a mapping relationship between the book copyright and an owner of the book copyright can be recorded. For example, user A owns copyright of book B, and enterprise C owns copyright of book D, and so on. The record blockchain uses the distributed database technology, that is, some blockchain nodes jointly maintain a unified blockchain ledger, and blocks contained in the blockchain ledger are implemented as a content-related blockchain-type structure. Therefore, the ledger data in the record blockchain features openness and tamper-resistance, helping implement a secure and reliable recording function.

In some embodiments, in addition to the book copyright, the rights in the present specification can further include other types, such as song copyright, movie copyright, software copyright, patent right, real estate right, etc., which is not limited in the present specification.

Step 306: Respond to the right confirmation request based on the data that specifies the ownership of rights, so that the right usage blockchain processes the right usage service based on a response result.

In some embodiments, the cross-chain relay can determine whether the target right indicated in the right confirmation request belongs to the target object based on the data that specifies the ownership of rights, and return a determination result to the right usage blockchain. In other words, the response result received by the right usage blockchain contains the determination result, so that the right usage blockchain can process the right usage service accordingly.

In some embodiments, the cross-chain relay can obtain the data that specifies the ownership of rights and return the data that specifies the ownership of rights to the right usage blockchain, so that the right usage blockchain determines whether the target right belongs to the target object. In other words, the right usage blockchain can obtain the data that specifies the ownership of rights, so that a blockchain node on the right usage blockchain can determine whether the target right belongs to the target object based on the data that specifies the ownership of rights, and the cross-chain relay is used only to obtain the data that specifies the ownership of rights and provide the data that specifies the ownership of rights to the right usage blockchain.

Correspondingly, FIG. 4 is a flowchart illustrating another cross-chain right usage method, according to some example embodiments. As shown in FIG. 4, the method is applied to a blockchain node on a right usage blockchain, the right usage blockchain is connected to a cross-chain relay, the cross-chain relay is further connected to at least one record blockchain, and the method can include the following steps:

Step 402: Initiate a right confirmation request to the cross-chain relay for a right usage service, so that the cross-chain relay reads data that specifies ownership of rights recorded on the record blockchain and responds to the right confirmation request based on the data that specifies the ownership of rights.

In some embodiments, the cross-chain relay is used to implement a relay function between the right usage blockchain and the record blockchain, so that the right usage blockchain can access the record blockchain through the cross-chain relay, thereby implementing interconnection between the right usage blockchain and the record blockchain. In addition, based on the relay function implemented by the cross-chain relay, the right usage blockchain and the record blockchain are individually connected to the cross-chain relay, instead of direct interconnection between the right usage blockchain and the record blockchain. Depending on actual needs, the right usage blockchains and the record blockchains that are connected to the cross-chain relay can be increased or decreased, so that the entire system has excellent scalability.

In some embodiments, when the right usage blockchain initiates a right confirmation request to the cross-chain relay, it should specifically be that at least one blockchain node on the right usage blockchain initiates the right confirmation request to the cross-chain relay. For example, the blockchain client device can send a request instruction to at least one blockchain node on the right usage blockchain based on the user's instruction, so that the at least one blockchain node can initiate a corresponding right confirmation request to the cross-chain relay. For another example, the blockchain client device can submit a transaction proposal to at least one blockchain node on the right usage blockchain, so that when consensus is reached on the transaction proposal and the transaction proposal is executed, the previous right confirmation request can be initiated to the cross-chain relay. As another example, the blockchain client device can submit a transaction proposal to at least one blockchain node on the right usage blockchain, so that when consensus is reached on the transaction proposal and the transaction proposal is executed, a smart contract can be invoked. The smart contract can be used to automatically initiate the previous right confirmation request to the cross-chain relay, and the smart contract can further determine whether to perform a related operation based on data that specifies ownership of rights fed back by the record blockchain. For example, the related operation is allowed to be smoothly executed only when the data that specifies the ownership of rights indicates that a target right belongs to a target object; otherwise, the related operation is terminated.

In some embodiments, the record blockchain is used to record the data that specifies the ownership of rights. Book copyright is used as an example, and a mapping relationship between the book copyright and an owner of the book copyright can be recorded. For example, user A owns copyright of book B, and enterprise C owns copyright of book D, and so on. The record blockchain uses the distributed database technology, that is, some blockchain nodes jointly maintain a unified blockchain ledger, and blocks contained in the blockchain ledger are implemented as a content-related blockchain-type structure. Therefore, the ledger data in the record blockchain features openness and tamper-resistance, helping implement a secure and reliable recording function.

In some embodiments, in addition to the book copyright, the rights in the present specification can further include other types, such as song copyright, movie copyright, software copyright, patent right, real estate right, etc., which is not limited in the present specification.

Step 404: Process the right usage service based on a response result returned by the cross-chain relay.

In some embodiments, the cross-chain relay can determine whether the target right indicated in the right confirmation request belongs to the target object based on the data that specifies the ownership of rights, and return a determination result to the right usage blockchain. In other words, the response result received by the right usage blockchain contains the determination result, so that the right usage blockchain can process the right usage service accordingly.

In some embodiments, the cross-chain relay can obtain the data that specifies the ownership of rights and return the data that specifies the ownership of rights to the right usage blockchain, so that the right usage blockchain determines whether the target right belongs to the target object. In other words, the right usage blockchain can obtain the data that specifies the ownership of rights, so that a blockchain node on the right usage blockchain can determine whether the target right belongs to the target object based on the data that specifies the ownership of rights, and the cross-chain relay is used only to obtain the data that specifies the ownership of rights and provide the data that specifies the ownership of rights to the right usage blockchain.

In some embodiments, the blockchain node on the right usage blockchain can generate right confirmation information based on the response result, and the right confirmation information indicates that the target right belongs to the target obj ect; then, the blockchain node can submit a blockchain transaction corresponding to the right usage service to the right usage blockchain, where the blockchain transaction includes the right confirmation information. For example, consensus processing cannot be performed on a blockchain transaction that does not contain right confirmation information. For another example, including right confirmation information in a blockchain transaction enables the right confirmation information to be used as a prerequisite for successful execution of the blockchain transaction. As another example, including right confirmation information in a blockchain transaction enables the right confirmation information to be used as a proof of validity of the blockchain transaction, and a blockchain transaction that does not contain right confirmation information is determined as an invalid transaction.

In some embodiments, the blockchain node of the right usage blockchain can submit a blockchain transaction corresponding to the right usage service to the right usage blockchain, where the blockchain transaction includes information for invoking a smart contract, so that the smart contract executes the blockchain transaction. Correspondingly, the blockchain node can initiate the right confirmation request to the cross-chain relay by invoking the smart contract. The blockchain node can provide the response result to the smart contract, so that the smart contract executes the blockchain transaction based on the response result. For example, the smart contract can execute a transaction operation indicated by the blockchain transaction when the response result indicates that the target right belongs to the target object; otherwise, the smart contract skips executing the transaction operation.

It is worthwhile to note that, the transaction described in the present specification is a piece of data that is created by a user through a client device of a blockchain and needs to be eventually published to a distributed database of the blockchain. Transactions in the blockchain are classified into transactions in a narrow sense and transactions in a broad sense. A transaction in a narrow sense refers to a value transfer that is published by a user to the blockchain. For example, in a conventional bitcoin blockchain network, a transaction can be a funds transfer initiated by a user in the blockchain. A transaction in a broad sense refers to a piece of service data with a service intent that is published by a user to the blockchain. For example, an operator can build a consortium blockchain depending on an actual service need, and with the help of the consortium blockchain, deploy some other types of online services (such as a copyright service, a rental service, a vehicle dispatching service, an insurance claim settlement service, a credit service, a medical service, etc.) that are unrelated to value transfer. In such consortium blockchain, a transaction can be a service message or service request with a service intent that is published by the user in the consortium blockchain.

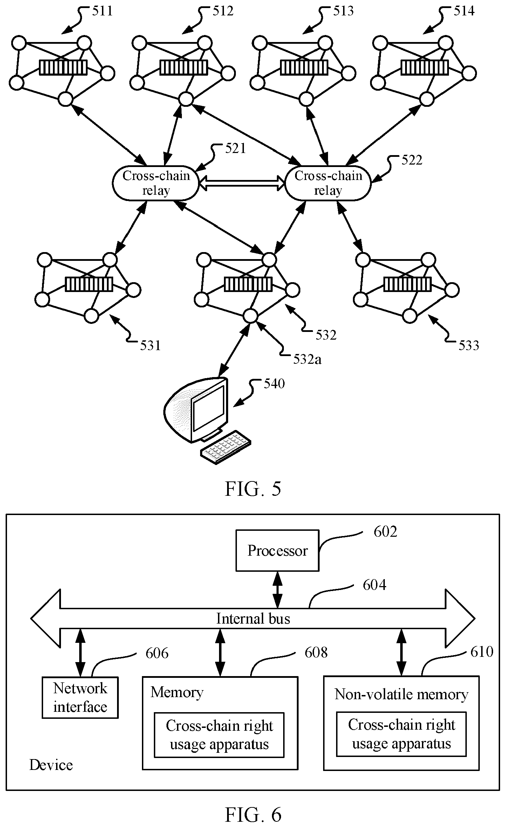

For ease of understanding, using a book copyright usage scenario as an example, the following describes in detail the technical solutions of the present specification with reference to FIG. 5.

FIG. 5 is a schematic structural diagram illustrating a cross-chain right usage system, according to some example embodiments. As shown in FIG. 5, the system can include one or more record blockchains, one or more right usage blockchains, and at least one cross-chain relay. For example, the record blockchains can include blockchains 511, 512, 513, and 514; the right usage blockchains can include blockchains 531, 532, and 533; the cross-chain relay can include relays 521 and 522.

Blockchains 511 to 514 are used to record data that specifies ownership of rights. In the book copyright scenario, the data that specifies the ownership of rights is used to indicate ownership of book copyright. For example, book copyright T1 belongs to user UA and book copyright T2 belongs to enterprise UB, and so on. The data that specifies the ownership of rights may be separately recorded on different record blockchains due to privacy requirements (for example, different blockchains are used to record data that specifies ownership of rights of different levels of privacy requirements), service isolation (for example, isolation between a personal service and a corporate service, isolation between an educational book service and a technological book service, etc.), consortium of participants (for example, different consortiums use different record blockchains, and each record blockchain stores only data that specifies ownership of rights provided by participants of a corresponding consortium). The blockchain nodes on the blockchains 511 to 514 can individually perform consensus processing on the submitted copyright data, and store the copyright data upon which consensus has been reached as corresponding data that specifies ownership of rights in a form of a key-value pair or in any other forms that are not limited by the present specification, so that the data that specifies the ownership of the rights is recorded as ledger data in the corresponding blockchain, and the data that specifies the ownership of rights is thus recorded. Therefore, when the cross-chain relay 521 or 522 reads the data that specifies the ownership of rights from the ledger data in the blockchains 511 to 514, it can be ensured that the ownership of the book copyright described in the data that specifies the ownership of rights is true and effective, so that the right usage blockchain can process a related right usage service accordingly.

As described previously, the cross-chain relays 521 and 522 are used to implement data connection between the blockchains 511 to 514 and the blockchains 531 to 533, so that the blockchains 531 to 533 can access the data that specifies the ownership of rights recorded on the blockchains 511 to 514 through the cross-chain relays 521 and 522, so as to determine a method for processing the related right usage service. The blockchains 531 to 533, etc., as right usage blockchains, are used to access the data that specifies the ownership of rights recorded on the blockchains 511 to 514 through the cross-chain relays 521 and 522 depending on actual service needs. Depending on privacy needs, service needs, participant isolation needs, and other reasons, there can be a plurality of right usage blockchains (such as blockchains 531 to 533), as shown in FIG. 5. Certainly, a quantity of right usage blockchains is not limited in the present specification.

For example, assume that enterprise UX agrees with user UA that enterprise UX pays a specific asset certificate to user UA to obtain authorization to use book copyright of painting K drawn by user UA. For example, the staff on enterprise UX side can operate a computing device 540 so that the computing device 540 can submit a transaction proposal to a blockchain node 532a in the blockchain 532. The transaction proposal is submitted for painting K held by user UA, and is used to pay an asset certificate of amount i to user UA after it is determined that user UA owns the book copyright of painting K.

The blockchain node 532a can publish the transaction proposal in the blockchain 532 so that the transaction proposal can be executed in the blockchain 532. The transaction proposal needs to complete two operation steps: the first step is to verify that user UA owns the book copyright of painting K, and the second step is used for enterprise UX to pay an asset certificate of amount i to user UA. Therefore, a smart contract can be defined in advance so that the transaction proposal invokes the smart contract. As such, the smart contract can automatically and efficiently complete the previous two operation steps without being subject to external impact.

For example, the smart contract can initiate a right confirmation request to the cross-chain relay 521 or 522, and the right confirmation request is used to request to verify whether user UA owns the book copyright of painting K. If the smart contract sends the right confirmation request to the cross-chain relay 521, the cross-chain relay 521 can read the data that specifies the ownership of rights recorded on the blockchains 511 to 514 based on cross-chain technologies (such as the side-chain technology, the notary technology, etc., which are not limited in the present specification) in related technologies, and verify, based on the data that specifies the ownership of rights, whether user UA owns the book copyright of painting K. When the ownership of the book copyright of painting K is recorded as ledger data in the blockchain 511 or 512, because the cross-chain relay 521 in FIG. 5 is directly connected to the blockchains 511 and 512, the cross-chain relay 521 can directly read the data that specifies the ownership of rights recorded on the blockchains 511 and 512, and verify whether user UA owns the book copyright of painting K. When the ownership of the book copyright of painting K is recorded as ledger data in the blockchain 513 or 514, because the cross-chain relay 521 in FIG. 5 is not directly connected to the blockchains 513 and 514, the cross-chain relay 521 can read the data that specifies the ownership of rights recorded on the blockchains 513 and 514 through a data channel between the cross-chain relay 521 and the cross-chain relay 522, to verify whether user UA owns the book copyright of painting K. Certainly, the cross-chain relay 522 can alternatively verify whether user UA owns the book copyright of painting K and inform the cross-chain relay 521 of a verification result.

Regardless of reading the data that specifies the ownership of rights and verifying whether user UA owns the book copyright of painting K accordingly, or directly obtaining the verification result returned by the cross-chain relay 522, in short, the cross-chain relay 521 can obtain a corresponding verification result and return the corresponding verification result to the smart contract. Correspondingly, the smart contract can complete the second operation step described previously when the verification result indicates that user UA owns the book copyright of painting K. That is, enterprise UX pays an asset certificate of amount i to user UA, for example, the asset certificate of amount i is deducted from a blockchain account corresponding to enterprise UX, and the asset certificate of amount i is added to a blockchain account corresponding to user UA. Certainly, if the verification result indicates that user UA does not own the book copyright of painting K, the smart contract can refuse to perform the second operation step described previously. For example, it can be determined that the execution of the second operation step fails.

It can be seen that due to the use of the system structure of "record blockchain - cross-chain relay - right usage blockchain" shown in FIG. 5, the record blockchain and the right usage blockchain only need to consider respective connections with the cross-chain relay, without considering direct connection between the record blockchain and the right usage blockchain. Therefore, when the record blockchain or the right usage blockchain needs to be increased or decreased, corresponding configuration operations can be easily performed so that the system has high scalability.

FIG. 6 is a schematic structural diagram illustrating a device, according to some example embodiments. References are made to FIG. 6. At the hardware level, the device includes a processor 602, an internal bus 604, a network interface 606, a memory 608, and a non-volatile memory 610, and certainly may further include other hardware needed by a service. The processor 602 reads a corresponding computer program from the non-volatile memory 610 to the memory 608 and then runs the computer program to form a cross-chain right usage apparatus at the logic level. Certainly, in addition to software implementations, one or more embodiments of the present specification do not preclude other implementations, such as a logic device or a combination of software and hardware. In other words, an execution body of the following processing procedure is not limited to each logical unit, and can be hardware or a logic device.

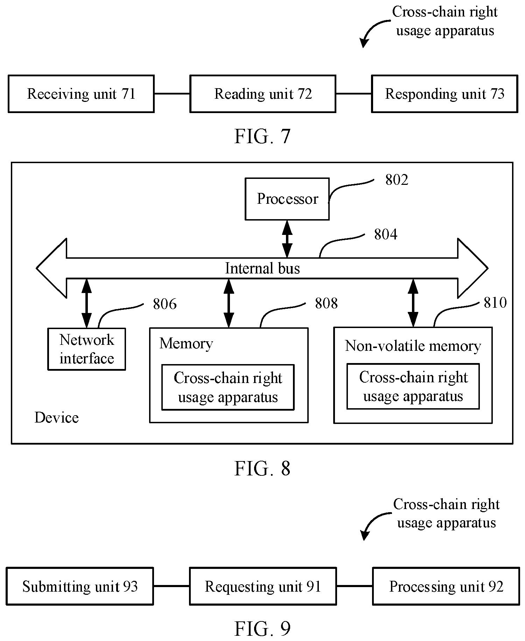

References are made to FIG. 7. In software implementations, the cross-chain right usage apparatus is applied to a cross-chain relay, the cross-chain relay is separately connected to at least one record blockchain and at least one right usage blockchain, and the apparatus can include the following: a receiving unit 71, configured to receive a right confirmation request initiated by the right usage blockchain for a right usage service; a reading unit 72, configured to read data that specifies ownership of rights recorded on the record blockchain; and a responding unit 73, configured to respond to the right confirmation request based on the data that specifies the ownership of rights, so that the right usage blockchain processes the right usage service based on a response result.

Optionally, the responding unit 73 is specifically configured to: determine whether a target right indicated in the right confirmation request belongs to a target object based on the data that specifies the ownership of rights; and return a determination result to the right usage blockchain.

Optionally, the responding unit 73 is specifically configured to: obtain the data that specifies the ownership of rights; and return the data that specifies the ownership of rights to the right usage blockchain, so that the right usage blockchain determines whether the target right belongs to the target object.

FIG. 8 is a schematic structural diagram illustrating a device, according to some example embodiments. References are made to FIG. 8. At the hardware level, the device includes a processor 802, an internal bus 804, a network interface 806, a memory 808, and a non-volatile memory 810, and certainly may further include other hardware needed by a service. The processor 802 reads a corresponding computer program from the non-volatile memory 810 to the memory 808 and then runs the computer program to form a cross-chain right usage apparatus at the logic level. Certainly, in addition to software implementations, one or more embodiments of the present specification do not preclude other implementations, such as a logic device or a combination of software and hardware. In other words, an execution body of the following processing procedure is not limited to each logical unit, and can be hardware or a logic device.

References are made to FIG. 9. In software implementations, the cross-chain right usage apparatus is applied to a blockchain node on a right usage blockchain, the right usage blockchain is connected to a cross-chain relay, the cross-chain relay is further connected to at least one record blockchain, and the apparatus can include the following: a requesting unit 91, configured to initiate a right confirmation request to the cross-chain relay for a right usage service, so that the cross-chain relay reads data that specifies ownership of rights recorded on the record blockchain and responds to the right confirmation request based on the data that specifies the ownership of rights; and a processing unit 92, configured to process the right usage service based on a response result returned by the cross-chain relay.

Optionally, the processing unit 92 is specifically configured to: generate right confirmation information based on the response result, where the right confirmation information indicates that the target right belongs to the target object; and submit a blockchain transaction corresponding to the right usage service to the right usage blockchain, where the blockchain transaction includes the right confirmation information.

Optionally, the apparatus further includes a submitting unit 93, configured to submit a blockchain transaction corresponding to the right usage service to the right usage blockchain, where the blockchain transaction includes information for invoking a smart contract, so that the smart contract executes the blockchain transaction; the requesting unit 91 is specifically configured to initiate the right confirmation request to the cross-chain relay by invoking the smart contract; and the processing unit 92 is specifically configured to provide the response result to the smart contract, so that the smart contract executes the blockchain transaction based on the response result.

Optionally, the response result includes a determination result generated by the cross-chain relay based on the data that specifies the ownership of rights, where the determination result is used to indicate whether the target right belongs to the target obj ect.

Optionally, the processing unit 92 is specifically configured to: obtain the data that specifies the ownership of rights included in the response result; and determine whether the target right belongs to the target object, so as to process the right usage service based on the determination result.

The system, apparatus, module, or unit illustrated in the previous embodiments can be implemented by using a computer chip or an entity, or can be implemented by using a product having a specific function. A typical implementation device is a computer, and the computer can be a personal computer, a laptop computer, a cellular phone, a camera phone, a smartphone, a personal digital assistant, a media player, a navigation device, an email receiving and sending device, a game console, a tablet computer, a wearable device, or any combination of these devices.

In a typical configuration, a computer includes one or more processors (CPU), one or more input/output interfaces, one or more network interfaces, and one or more memories.

The memory may include a non-persistent memory, a random access memory (RAM), a non-volatile memory, and/or another form that are in a computer readable medium, for example, a read-only memory (ROM) or a flash memory (flash RAM). The memory is an example of the computer readable medium.

The computer readable medium includes persistent, non-persistent, movable, and unmovable media that can store information by using any method or technology. Information can be a computer readable instruction, a data structure, a module of a program or other data. Examples of a computer storage medium include but are not limited to a phase change random access memory (PRAM), a static RAM (SRAM), a dynamic RAM (DRAM), a RAM of another type, a read-only memory (ROM), an electrically erasable programmable ROM (EEPROM), a flash memory or another memory technology, a compact disc ROM (CD-ROM), a digital versatile disc (DVD) or another optical storage, a cassette tape, a magnetic disk storage, a quantum memory, a storage medium based on grapheme, another magnetic storage device, or any other non-transmission medium. The computer storage medium can be used to store information that can be accessed by the computing device. Based on the definition in the present specification, the computer readable medium does not include transitory media such as a modulated data signal and carrier.

It is worthwhile to further note that, the terms "include", "contain", or their any other variants are intended to cover a non-exclusive inclusion, so a process, a method, a product or a device that includes a list of elements not only includes those elements but also includes other elements which are not expressly listed, or further includes elements inherent to such process, method, product or device. Without more constraints, an element preceded by "includes a ..." does not preclude the existence of additional identical elements in the process, method, product or device that includes the element.

The specific embodiments of the present specification are described previously. Other embodiments fall within the scope of the appended claims. In some situations, the actions or steps described in the claims can be performed in an order different from the order in the embodiments and the desired results can still be achieved. In addition, the process depicted in the accompanying drawings does not necessarily need a particular execution order to achieve the desired results. In some implementations, multi-tasking and concurrent processing are feasible or may be advantageous.

Terms used in one or more embodiments of the present specification are merely used to describe specific embodiments, and are not intended to limit the one or more embodiments of the present specification. The terms "a" and "the" of singular forms used in one or more embodiments of the present specification and the appended claims are also intended to include plural forms, unless otherwise specified in the context clearly. It should be further understood that the term "and/or" used in the present specification indicates and includes any or all possible combinations of one or more associated listed items.

It should be understood that although terms "first", "second", "third", etc. can be used in one or more embodiments of the present specification to describe various types of information, the information is not limited to these terms. These terms are only used to differentiate between information of the same type. For example, without departing from the scope of one or more embodiments of the present specification, first information can also be referred to as second information, and similarly, the second information can be referred to as the first information. Depending on the context, for example, the word "if" used here can be explained as "while", "when", or "in response to determining".

The previous descriptions are only example embodiments of one or more embodiments of the present specification, but are not intended to limit the one or more embodiments of the present specification. Any modification, equivalent replacement, improvement, etc. made without departing from the spirit and principle of the one or more embodiments of the present specification shall fall within the protection scope of the one or more embodiments of the present specification.

## Claims

1. A cross-chain right usage system, comprising the following:
one or more record blockchains, wherein the record blockchain is used to record data that specifies ownership of rights;
one or more right usage blockchains, wherein the right usage blockchain is used to process a right usage service; and
at least one cross-chain relay, wherein the cross-chain relay is separately connected to at least one record blockchain and at least one right usage blockchain; the cross-chain relay reads data that specifies ownership of rights recorded on the record blockchain in response to a right confirmation request initiated by the right usage blockchain, so that the right usage blockchain processes a corresponding right usage service based on a response result.

2. The system according to claim 1, wherein a plurality of cross-chain relays are interconnected; when a first cross-chain relay receives a right confirmation request that is initiated by any right usage blockchain and that is related to any record blockchain, and the first cross-chain relay is not connected to the any record blockchain, the first cross-chain relay forwards the right confirmation request to a second cross-chain relay connected to the any record blockchain, so that the second cross-chain relay reads data that specifies ownership of rights on the any record blockchain in response to the right confirmation request initiated by the any right usage blockchain.

3. A cross-chain right usage method, wherein the method is applied to a cross-chain relay, the cross-chain relay is separately connected to at least one record blockchain and at least one right usage blockchain, and the method comprises the following:
receiving a right confirmation request initiated by the right usage blockchain for a right usage service;
reading data that specifies ownership of rights recorded on the record blockchain; and
responding to the right confirmation request based on the data that specifies the ownership of rights, so that the right usage blockchain processes the right usage service based on a response result.

4. The method according to claim 3, wherein the responding to the right confirmation request based on the data that specifies the ownership of rights comprises:
determining whether a target right indicated in the right confirmation request belongs to a target object based on the data that specifies the ownership of rights; and
returning a determination result to the right usage blockchain.

5. The method according to claim 3, wherein the responding to the right confirmation request based on the data that specifies the ownership of rights comprises:
obtaining the data that specifies the ownership of rights; and
returning the data that specifies the ownership of rights to the right usage blockchain, so that the right usage blockchain determines whether a target right belongs to a target object.

6. A cross-chain right usage method, wherein the method is applied to a blockchain node on a right usage blockchain, the right usage blockchain is connected to a cross-chain relay, the cross-chain relay is further connected to at least one record blockchain, and the method comprises the following:
initiating a right confirmation request to the cross-chain relay for a right usage service, so that the cross-chain relay reads data that specifies ownership of rights recorded on the record blockchain and responds to the right confirmation request based on the data that specifies the ownership of rights; and
processing the right usage service based on a response result returned by the cross-chain relay.

7. The method according to claim 6, wherein the processing the right usage service based on a response result returned by the cross-chain relay comprises the following:
generating right confirmation information based on the response result, wherein the right confirmation information indicates that a target right belongs to a target object; and
submitting a blockchain transaction corresponding to the right usage service to the right usage blockchain, wherein the blockchain transaction comprises the right confirmation information.

8. The method according to claim 6, wherein
the method further comprises the following: submitting a blockchain transaction corresponding to the right usage service to the right usage blockchain, wherein the blockchain transaction comprises information for invoking a smart contract, so that the smart contract executes the blockchain transaction;
the initiating a right confirmation request to the cross-chain relay for a right usage service comprises the following: initiating the right confirmation request to the cross-chain relay by invoking the smart contract; and
the processing the right usage service based on a response result returned by the cross-chain relay comprises the following: providing the response result to the smart contract, so that the smart contract executes the blockchain transaction based on the response result.

9. The method according to claim 6, wherein the response result comprises a determination result generated by the cross-chain relay based on the data that specifies the ownership of rights, wherein the determination result is used to indicate whether a target right belongs to a target object.

10. The method according to claim 6, wherein the processing the right usage service based on a response result returned by the cross-chain relay comprises the following:
obtaining the data that specifies the ownership of rights comprised in the response result; and
determining whether a target right belongs to a target object, so as to process the right usage service based on a determination result.

11. A cross-chain right usage apparatus, wherein the apparatus is applied to a cross-chain relay, the cross-chain relay is separately connected to at least one record blockchain and at least one right usage blockchain, and the apparatus comprises the following:
a receiving unit, configured to receive a right confirmation request initiated by the right usage blockchain for a right usage service;
a reading unit, configured to read data that specifies ownership of rights recorded on the record blockchain; and
a responding unit, configured to respond to the right confirmation request based on the data that specifies the ownership of rights, so that the right usage blockchain processes the right usage service based on a response result.

12. The apparatus according to claim 11, wherein the responding unit is specifically configured to:
determine whether a target right indicated in the right confirmation request belongs to a target object based on the data that specifies the ownership of rights; and
return a determination result to the right usage blockchain.

13. The apparatus according to claim 11, wherein the responding unit is specifically configured to:
obtain the data that specifies the ownership of rights; and
return the data that specifies the ownership of rights to the right usage blockchain, so that the right usage blockchain determines whether a target right belongs to a target obj ect.

14. A cross-chain right usage apparatus, wherein the apparatus is applied to a blockchain node on a right usage blockchain, the right usage blockchain is connected to a cross-chain relay, the cross-chain relay is further connected to at least one record blockchain, and the apparatus comprises the following:
a requesting unit, configured to initiate a right confirmation request to the cross-chain relay for a right usage service, so that the cross-chain relay reads data that specifies ownership of rights recorded on the record blockchain and responds to the right confirmation request based on the data that specifies the ownership of rights; and
a processing unit, configured to process the right usage service based on a response result returned by the cross-chain relay.

15. The apparatus according to claim 14, wherein the processing unit is specifically configured to:
generate right confirmation information based on the response result, wherein the right confirmation information indicates that a target right belongs to a target object; and
submit a blockchain transaction corresponding to the right usage service to the right usage blockchain, wherein the blockchain transaction comprises the right confirmation information.

16. The apparatus according to claim 14, wherein
the apparatus further comprises a submitting unit, configured to submit a blockchain transaction corresponding to the right usage service to the right usage blockchain, wherein the blockchain transaction comprises information for invoking a smart contract, so that the smart contract executes the blockchain transaction;
the requesting unit is specifically configured to initiate the right confirmation request to the cross-chain relay by invoking the smart contract; and
the processing unit is specifically configured to provide the response result to the smart contract, so that the smart contract executes the blockchain transaction based on the response result.

17. The apparatus according to claim 14, wherein the response result comprises a determination result generated by the cross-chain relay based on the data that specifies the ownership of rights, wherein the determination result is used to indicate whether a target right belongs to a target object.

18. The apparatus according to claim 14, wherein the processing unit is specifically configured to:
obtain the data that specifies the ownership of rights comprised in the response result; and
determine whether a target right belongs to a target object, so as to process the right usage service based on a determination result.

19. An electronic device, comprising the following:
a processor; and
a memory, configured to store a processor executable instruction, wherein
the processor runs the executable instruction to implement the method according to any one of claims 3 to 10.

20. A computer readable storage medium, wherein the computer readable storage medium stores a computer instruction, and the instruction is executed by a processor to implement the steps of the method according to any one of claims 3 to 10.
